# EUROPÄISCHE PATENTANMELDUNG

(11) **EP 4 488 876 A1**
(43) Veröffentlichungstag der Anmeldung: **08.01.2025**
(21) Anmeldenummer: 24180960.7
(22) Anmeldetag: 10.06.2024
(51) Int. Cl.: G06K 19/067, G06K 19/077, H01Q 1/22

(54) **LESEN EINES RFID-TRANSPONDERS AUF EINEM OBJEKT IN EINER VORRICHTUNG**

(30) Priorität: 04.07.2023 DE 102023117578
(71) Anmelder: SICK AG, 79183 Waldkirch (DE)
(72) Erfinder: Pudenz, Florian, 22359 Hamburg (DE)

(57) **Zusammenfassung**

Es wird ein System aus einer Vorrichtung (10) zur Aufnahme mindestens eines Objekts (12a-b) und einem in der Vorrichtung (10) angeordneten Objekt (12a-b) angegeben, wobei an dem Objekt (12a-b) ein RFID-Transponder (14) mit einer Antenne (15) angeordnet ist und wobei die Vorrichtung (10) mindestens eine Wand (18) und mindestens eine zu dem Objekt (12a-b) beabstandete resonante Struktur (20) aufweist. Dabei ist die resonante Struktur (20) als Schlitzstruktur in die Wand (18) eingebracht.

## Beschreibung

Die Erfindung betrifft eine Vorrichtung zur Aufnahme mindestens eines Objekts mit einem RFID-Transponder sowie ein Verfahren zum Lesen eines RFID-Transponders auf einem Objekt in einer Vorrichtung nach dem Oberbegriff von Anspruch 1 beziehungsweise 10.

Eine RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden.

Ein Einsatzgebiet von RFID-Transpondern ist eine möglichst lückenlose Dokumentation von Produktionsprozessen beispielsweise zur Qualitätssicherung und Rückverfolgbarkeit. Vielfach besteht der Wunsch, auch nach der Fertigung eines Produktes die einzelnen verwendeten Baugruppen identifizieren zu können. Dabei haben RFID-Transponder den Vorteil, dass eine Identifikation auch im Inneren etwa eines Gehäuses möglich ist, wo optische Erfassungen naturgemäß versagen müssten.

Die mögliche Kommunikationsreichweite für die drahtlose Aussendung und den Empfang der elektromagnetischen Wellen der RFID-Signale ist dabei begrenzt durch Faktoren wie die Freiraumdämpfung, die unter anderem durch länderspezifische Normen festgelegte maximal zulässige Sendeleistung, die Empfindlichkeit der Empfängerbauteile und den Antennengewinn sowohl der RFID-Lesevorrichtung als auch des RFID-Transponders.

Unter diesen Faktoren spielt der Antennengewinn des RFID-Transponders eine besonders wichtige Rolle. Dieser wiederum hängt neben der Antennenstruktur vor allem von der Größe der Antenne und damit des RFID-Transponders ab. Gerade für die Identifikation von Baugruppen, die bisweilen selbst sehr klein sind und deren Eigenschaften jedenfalls durch den RFID-Transponder möglichst wenig beeinflusst werden sollen, werden jedoch besonders kleine RFID-Transponder eingesetzt. Deren geringer Antennengewinn führt zu einer geringen Lesereichweite, so dass der RFID-Transponder in einem größeren Gerät oder einer Maschine nicht mehr gelesen werden kann. Ein weiteres Problem stellen metallische Gehäuse dar, die aufgrund ihrer abschirmenden Eigenschaften eine Funkverbindung verhindern oder stark beeinträchtigen.

Aus der US 6 320 509 und der US 6 441 740 sind jeweils Anordnungen bekannt, in denen ein RFID-Transponder mit einem oder mehreren metallischen Reflektoren in Form von geraden oder gekrümmten Flächen versehen wird, um auf diese Weise den Antennengewinn in eine Vorzugsrichtung zu bündeln. Dafür werden aber Reflektorflächen benötigt, die deutlich größer sind als die Transponderstrukturen.

Seit langem sind Yagi-Antennen weit verbreitet, die darauf beruhen, dass die Richtwirkung einer Dipolantenne in eine Richtung gebündelt werden kann, wenn zusätzliche auf die Resonanzfrequenz abgestimmte Stäbe aus leitfähigem Material vor und hinter der Dipolantenne positioniert werden. Das kann dann auf Seiten der RFID-Lesevorrichtung eingesetzt werden, wie etwa in der US 2009/0174557 A1 beschrieben. Die Strukturen auf Seiten des RFID-Transponders beruhen jedoch nicht zuletzt aus Platzgründen auf anderen Antennenoptimierungen.

In der WO 00/21030 wird ein RFID-Transponder vorgestellt, der neben seiner eigentlichen Antennenstruktur ein zusätzliches Element zur Verbesserung der RFID-Eigenschaften aufweist. Allerdings wird das dann insgesamt vergossen, so dass der RFID-Transponder entsprechende Dimensionen zur Aufnahme der gesamten resultierenden Antenne aufweist.

Die US 2008/0303633 A1 offenbart Reflektoren und Direktoren, die zu einem RFID-Transponder beabstandet angeordnet werden, um Yagi-Antennen zu bilden, die eine Lesereichweite verdoppeln können. Das löst aber noch nicht das Problem, ins Innere eines Gerätes hinein lesen zu können, insbesondere durch eine metallische Hülle, und ist auch dann nicht einsetzbar, wenn im Inneren kein Bauraum zur Verfügung steht.

In der US 2017/0277922 A1 wird ein RFID-Signal mittels Koaxialkabel ins Innere eines Fahrzeugs weitergeleitet. Das bedeutet jedoch einen großen Aufwand und Platzbedarf.

Die US 7 994 962 B1 offenbart ein Verfahren zum Konzentrieren von RF-Strahlung auf ein Objekt mittels Reflektoren in Dimensionen, die für die Kennzeichnung von Baugruppen nicht brauchbar wären.

Es ist daher Aufgabe der Erfindung, das Lesen von RFID-Transpondern weiter zu verbessern.

Diese Aufgabe wird durch eine Vorrichtung zur Aufnahme mindestens eines Objekts mit einem RFID-Transponder sowie ein Verfahren zum Lesen eines RFID-Transponders auf einem Objekt in einer Vorrichtung nach Anspruch 1 beziehungsweise 10 gelöst. Die Vorrichtung ist beispielsweise ein elektronisches Gerät, ein Fahrzeug, eine Maschine oder ein Teil davon, insbesondere eine umhüllende beziehungsweise Objekte tragende Konstruktion oder ein Gehäuse. Die Vorrichtung weist wenigstens eine Wand auf, so dass insbesondere bezüglich der Wand ein Innen und ein Außen unterschieden werden können. Das Objekt kann eine Baugruppe oder Komponente davon sein und ist mit einem RFID-Transponder gekennzeichnet, um es mittels einer RFID-Lesevorrichtung zu identifizieren. Der RFID-Transponder weist eine integrierte Antenne auf. Deren effektiver Antennengewinn und damit die Lesereichweite wird durch mindestens eine zu dem Objekt und somit auch dem RFID-Transponder mit dessen Antenne beabstandete resonante Struktur erhöht.

Die Erfindung geht von dem Grundgedanken aus, die resonante Struktur gemeinsam mit der Wand zu realisieren. Dazu wird sie als Schlitzstruktur in die Wand eingebracht. Liest nun eine RFID-Lesevorrichtung von der dem RFID-Transponder abgewandten Seite der Wand her, so wirkt die Schlitzstruktur effektiv wie eine Verlängerung der Antenne des RFID-Transponders.

Die Erfindung hat den Vorteil, dass eine Verbesserung der Sende- und Empfangseigenschaften des RFID-Transponders erreicht wird, mit der sich die Lesereichweite vergrößert. Dadurch kann auch mit besonders kleinen oder kompakten RFID-Transpondern verschiedener Bauformen kommuniziert werden, die dafür originär einen zu kleinen Antennengewinn aufweisen, zu weit entfernt wären oder durch Schirmwirkungen beziehungsweise Dämpfungen insbesondere der Wand nicht erfasst würden. Die RFID-Transponder selbst müssen dafür nicht nachträglich modifiziert werden. Das Anbringen der Schlitzstrukturerfordert nur wenig Aufwand und keinerlei zusätzliche Materialkosten.

Die Vorrichtung ist bevorzugt als Gehäuse oder Verkleidung ausgebildet. Die Wand schließt das Gehäuse vorzugsweise in einer Richtung ab. Das Gehäuse kann das Au-ßengehäuse eines elektronischen Geräts sein, aber auch ein inneres Gehäuse einer Komponente oder eines Moduls. Somit sind mehrere Teilgehäuse ebenso denkbar wie mehrere Objekte innerhalb eines Gehäuses, von denen eines, mehrere oder alle Objekte mit einem oder mehreren RFID-Transpondern gekennzeichnet sein können.

Die Wand ist vorzugsweise eine metallische Wand. Vorzugsweise ist ein Gehäuse der Vorrichtung insgesamt aus Metall. Ein Beispiel ist die metallische Außenhaut eines Fahrzeugs. Durch eine metallische Wand oder Umhüllung könnte wegen der Schirmwirkung nach dem Stand der Technik gar nichts gelesen werden. Die Schlitzstruktur macht die Wand nicht nur effektiv transparent für das RFID-Signal, sondern erhöht dabei auch noch die Lesereichweite. In eine nicht metallische Wand kann beispielsweise ein Metallelement mit der Schlitzstruktur eingebracht werden.

Die resonante Struktur ist vorzugsweise auf eine Wellenlänge des RFID-Transponders abgestimmt. Insbesondere kann eine Strukturgröße der halben Wellenlänge des RFID-Transponders gewählt werden. Die notwendige Größe ist damit einfach abschätzbar, und die Schlitzstruktur kann recht klein bleiben. Bei einer RFID-Frequenz von 866,5 MHz beispielsweise wären es etwa 17,3cm. Diese Größe muss nicht exakt eingehalten werden, die Resonanz verschlechtert sich mit Abweichungen, aber es wird weiterhin eine signifikante, wenn auch nicht die höchstmögliche Reichweitenerhöhung erzielt.

Die resonante Struktur ist vorzugsweise in einem auf eine Wellenlänge des RFID-Transponders abgestimmten Abstand zu dem Objekt angeordnet. Insbesondere beträgt der Abstand ein Viertel der Wellenlänge des RFID-Transponders. Da sich die Anordnung des Objekts bezüglich der Wand üblicherweise nicht an den Bedürfnissen der RFID-Lesung ausrichtet, besteht oftmals nur die Wahl, welche Wand in geeignetem Abstand zu dem Objekt mit der Schlitzstruktur versehen werden sollte. Der optimale Abstand wird dann in der Regel nur näherungsweise erreicht. Wie schon im Falle der Größe der resonanten Struktur führt aber bereits ein ungefähr eingehaltener idealer Abstand schon zu einer Reichweitenerhöhung.

Das Objekt weist bevorzugt mindestens eine zweite resonante Struktur auf. Die zweite resonante Struktur wirkt mit der Schlitzstruktur zusammen, um die Richtwirkung beziehungsweise Reichweitenerhöhung zusätzlich zu verbessern. Für die zweite resonante Struktur sind verschiedene Bauformen vorstellbar, wie Draht, eine elektrische Leiterbahn auf einer Platine, eine metallisierte Folie mit Klebeschicht, metallischer Druck oder eine Integration von Metallpartikeln in Kunststoff, insbesondere mittels 3D-Druck. Sofern eine weitere Wand in geeigneter Position zur Verfügung steht oder hinzugefügt wird, kann die zweite resonante Struktur ebenfalls eine Schlitzstruktur sein.

Die zweite resonante Struktur ist vorzugsweise als Direktor zwischen der Schlitzstruktur und dem Objekt angeordnet. Die zweite resonante Struktur liegt dann im Ausbreitungsweg des RFID-Signals zwischen RFID-Transponder und RFID-Lesevorrichtung. Alternativ ist die zweite resonante Struktur als Reflektor in einer Verlängerung der Verbindung von Schlitzstruktur und Objekt und damit gleichsam hinter dem eigentlichen Ausbreitungsweg angeordnet. Es ist denkbar, eine dritte resonante Struktur oder weitere resonante Strukturen als Direktoren und/oder Resonatoren vorzusehen.

Das System weist bevorzugt eine RFID-Lesevorrichtung auf, um eine Information des RFID-Transponders auszulesen. Die RFID-Lesevorrichtung umfasst vorzugsweise mindestens eine eigene interne oder externe Antenne, einen mit der Antenne verbundenen Transceiver sowie eine mit dem Transceiver verbundene RFID-Steuer- und Auswertungseinheit. Die Antenne wird von der RFID-Lesevorrichtung zum Senden von RFID-Signalen an den RFID-Transponder und/oder zum Empfangen von RFID-Signalen von dem RFID-Transponder verwendet. Als Transceiver wird hier jede Kombination eines Senders und Empfängers bezeichnet. Die RFID-Steuer- und Auswertungseinheit, die mindestens einen digitalen Rechenbaustein aufweist, wie einen Mikroprozessor, ein FPGA (Field Programmable Gate Array), einen ASIC (Application Specific Integrated Circuit) oder dergleichen, ist für das Eincodieren einer RFID-Information in die RFID-Signale und/oder zum Auslesen einer RFID-Information aus den RFID-Signalen ausgebildet. Transceiver und RFID-Steuer- und Auswertungseinheit können einen gemeinsamen Rechenbaustein bilden oder jedenfalls teilweise einen Rechenbaustein gemeinsam nutzen. Dank der Schlitzstruktur ist die Lesereichweite erhöht, aus der die RFID-Lesevorrichtung den RIFD-Transponder lesen kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung einer Vorrichtung mit mehreren darin angeordneten Objekten oder Komponenten, die zumindest teilweise mit einem RFID-Transponder versehen sind, sowie mit einer RFID-Lesevorrichtung;
- Fig. 2: eine schematische Darstellung des durch eine resonante Struktur veränderten Antennengewinns einer Antenne;
- Fig. 3a-f: schematische Darstellungen der Antennen eines RFID-Transponders und einer RFID-Lesevorrichtung mit verschiedenen Konstellationen von resonanten Strukturen; und
- Fig. 4: eine schematische Darstellung einer als Schlitzstruktur ausgebildeten resonanten Struktur.

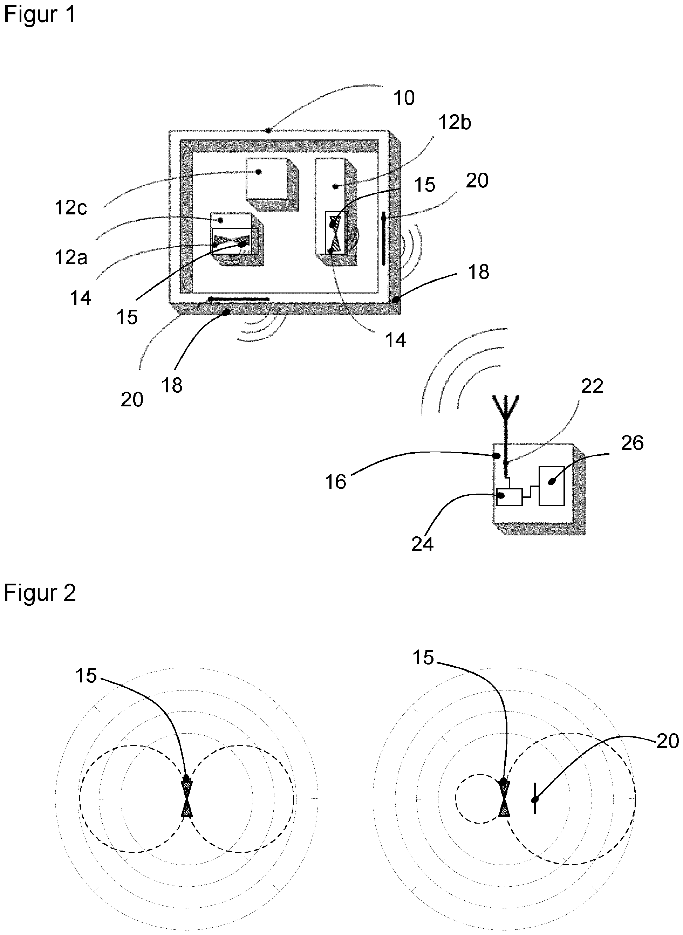

Figur 1 zeigt eine schematische Übersichtsdarstellung einer Vorrichtung 10, beispielsweise ein elektronisches Gerät, mit mehreren darin angeordneten Objekten 12a-c oder Einzelkomponenten, die zumindest teilweise mit einem RFID-Transponder 14 versehen sind, der eine Antenne 15 aufweist. Eine RFID-Lesevorrichtung 16 kann außerhalb der Vorrichtung 10 angeordnet werden, um mit einem RFID-Transponder 14 zu kommunizieren, insbesondere ein Objekt 12a-c anhand des daran angebrachten RFID-Transponders 14 zu identifizieren.

Gerade bei kleinen RFID-Transpondern 14 ist die Lese-/Schreibreichweite für eine erfolgreiche Kommunikation zwischen RFID-Lesevorrichtung 16 und RFID-Transponder 14 begrenzt. Diese Reichweite kann durch Schirmeffekte von Wänden 18 beispielsweise eines Gehäuses der Vorrichtung 10 noch verschlechtert werden, und im Falle eines metallischen Gehäuses kann eine Kommunikation auch vollständig verhindert werden.

Deshalb ist in mindestens einer Wand eine resonante Struktur 20 in Form einer Schlitzstruktur vorgesehen, um die Kommunikation zu verbessern. Mögliche Ausgestaltungen und die Wirkungsweise der Schlitzstruktur werden im Anschluss unter Bezugnahme auf die Figuren 2 bis 4 noch näher erläutert. Es gibt in Abhängigkeit von der Frequenz der RFID-Kommunikation ein jeweiliges Optimum für die Position und Größe der resonanten Struktur 20. Da die Position der Objekte 12a-b und der Wände 18 festliegt, kann eine optimale Position unter Umständen nur näherungsweise eingenommen werden. Auch die Größe ist womöglich durch Randbedingungen wie den verfügbaren Raum nicht ideal umsetzbar. Trotzdem wird die Signaldämpfung reduziert und die Kommunikation verbessert oder sogar erst ermöglicht.

Die RFID-Lesevorrichtung 16 weist ihrerseits eine Antenne 22 auf, die beispielsweise für das ISM-Band bei etwa 900 MHz ausgelegt ist. Anstelle der dargestellten internen Antenne 22 ist auch eine externe Antenne denkbar. An die Antenne 22 ist ein Transceiver 24 und daran eine Steuer- und Auswertungseinheit 26 der RFID-Lesevorrichtung 16 angeschlossen, um mittels der Antenne 22 empfangene RFID-Signale auszuwerten oder Informationen als RFID-Signale an den RFID-Transponder 14 zu senden. Die Steuer- und Auswertungseinheit 26 ist vorzugsweise mit einer nicht gezeigten, drahtgebundenen oder drahtlosen Schnittstelle verbunden, um Daten auszutauschen, Parametrierungen vorzunehmen und dergleichen. Die Funktionsweise einer RFID-Lesevorrichtung beispielsweise für den UHF-Frequenzbereich (Ultrahochfrequenz) nach dem Standard ISO 18000-6 ist an sich bekannt und wird deshalb nicht näher erläutert.

Figur 2 zeigt eine schematische Darstellung des durch eine resonante Struktur 20 veränderten Antennengewinns einer Antenne 15. Dabei ist zum Vergleich auf der linken Seite die Antenne 15 allein und auf der rechten Seite die Antenne mit der resonanten Struktur 20 dargestellt. Beispielsweise kann für einen RFID-Transponder 14 im UHF-Frequenzband bei 88,5 MHz ein Draht mit der Ausdehnung ungefähr einer halben Wellenlänge von 17,3 cm als resonante Struktur 20 ausgewählt werden und im Abstand eines Viertels der Wellenlänge zu der Antenne 15 positioniert werden. Wie schon erwähnt, tritt ein günstiger Effekt auch dann ein, wenn diese Vorgaben nur näherungsweise eingehalten werden und beispielsweise ein Draht der Länge 16 cm verwendet wird. Die Richtwirkung wird durch die resonante Struktur 20 deutlich verbessert, wenn im Beispiel der rechten Seite von Figur 2 von rechts her gelesen werden soll.

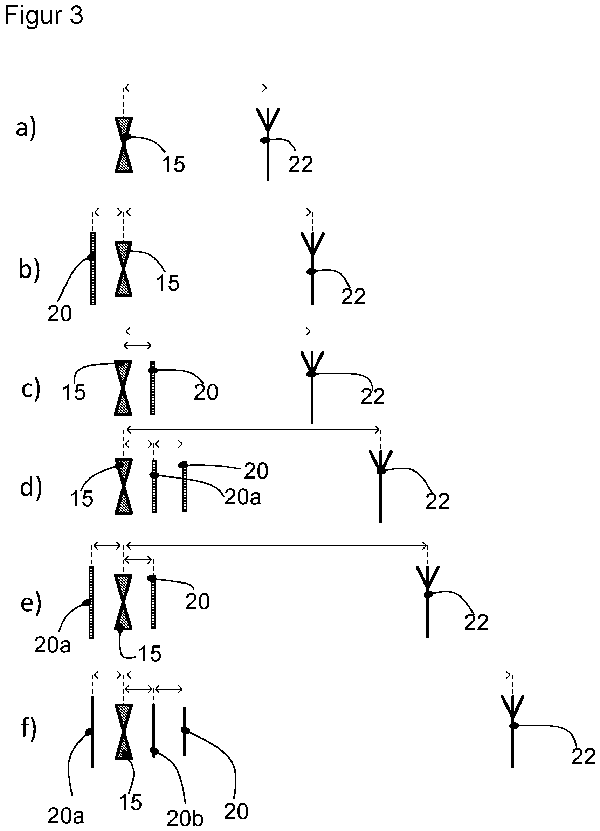

Die Figuren 3a-f zeigen jeweils schematische Darstellungen einer Antenne 15 eines RFID-Transponders 14 und einer Antenne 22 einer RFID-Lesevorrichtung 16 mit verschiedenen Konstellationen von resonanten Strukturen. Zunächst ist zum Vergleich in Figur 3a die Situation nur der beiden Antennen ohne zusätzliche resonante Struktur dargestellt. In Figur 3b ist, aus Sicht der Antenne 22 der RFID-Lesevorrichtung 16, eine resonante Struktur20 hinter der Antenne 15 des RFID-Transponders 14 angeordnet, die somit die Funktion eines Reflektors einnimmt. In Figur 3c ist die Reihenfolge umgekehrt und die resonante Struktur20 vor der Antenne 15 angeordnet, fungiert somit als Direktor.

Die Figuren 3d-f zeigen Konstellationen, in denen die resonante Struktur 20 um mindestens eine weitere resonante Struktur 20a-b ergänzt ist. Dabei sind prinzipiell auch noch mehr resonante Strukturen und zusätzliche damit realisierte Kombinationen von Reflektoren und Direktoren möglich. Figur 3d zeigt eine Anordnung mit zwei resonanten Strukturen 20, 20a vor der Antenne 15, die somit beide als Direktoren fungieren. Figur 3e zeigt je eine resonante Struktur 20 vor der Antenne 15 und eine resonante Struktur 20a hinter der Antenne 15 und somit eine Kombination eines Direktors und eines Reflektors. In Figur 3f ist als ein Beispiel für Kombinationen mit noch mehr resonanten Strukturen zu der Anordnung der Figur 3e noch ein weiteres resonantes Element 20b als zweiter Direktor ergänzt.

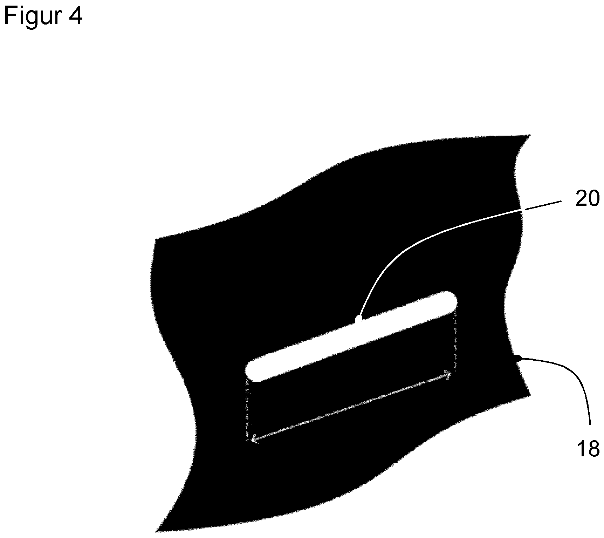

Figur 4 zeigt eine schematische Darstellung einer als Schlitzstruktur ausgebildeten resonanten Struktur 20, die in die Wand 18 eingebracht ist. Die Schlitzstruktur fungiert als Schlitzstrahler oder Schlitzantenne und ist damit ebenfalls in der Lage, die Lesereichweite zu verbessern beziehungsweise eine Kommunikation in eine metallisch umhüllte Vorrichtung 10 hinein überhaupt erst zu ermöglichen. Die geometrischen Anforderungen an den Schlitz oder die Aussparung hinsichtlich Ausdehnung und Position sind die gleichen wie bereits diskutiert.

Ein einem Anwendungsbeispiel ist die Vorrichtung 10 ein Fahrzeug, insbesondere ein PKW. Als die RFID-Transponder 14 tragende Objekte 12a-b sind darin Komponenten wie ein Sitz oder ein Steuergerät verbaut. Diese Komponenten sollen auch nach abgeschlossener Fahrzeugmontage noch durch Lesen der RFID-Transponder 14 identifizierbar sein. Aufgrund der Einbaulage wäre das nach dem Stand der Technik mit einer RFID-Lesevorrichtung 16, die vor dem Fahrzeug angeordnet wird, nicht möglich. In einer Ausführungsform der Erfindung kann nun an einer Seitenscheibe oder Kunststoffabdeckung eine resonante Struktur 20 als ein Metallteil mit der Schlitzstruktur angebracht werden. Noch einfacher ist, die Schlitzstruktur in die metallische Außenhaut einzubringen, wobei die Schlitzstruktur dann beispielsweise mit Kunststoff gefüllt sein kann, um den optischen Gesamteindruck des Fahrzeugs nicht zu stören. Die Schlitzstruktur ermöglicht es, die Komponenten des fertigen Fahrzeugs weiterhin von außerhalb durch Lesen der RFID-Transponder 14 zu identifizieren.

In einem anderen Anwendungsbeispiel ist die Vorrichtung 10 ein Elektrogerät, insbesondere ein großes Elektrogerät wie ein Flachbildfernseher, ein Staubsauger oder eine Waschmaschine. Innerhalb der Produktionskette wurde in die Vorrichtung 10 ein kompakter RFID-Transponder 14 integriert, der es ermöglichen soll, eine Komponente oder auch das gesamte Elektrogerät zu identifizieren. Die Transpondergröße würde gemäß Stand der Technik ein Lesen nur auf geringe Entfernung wie beispielsweise weniger als 10 cm erlauben. Insbesondere im Fall einer Reparatur oder Wartung soll aber die Identifikation von außen ohne Demontage eines Gehäuses möglich sein. Deshalb wird nun in einer Ausführungsform der Erfindung oberhalb des Transponders in eine Platine eine Schlitzstruktur als resonante Struktur 20 eingebracht oder dort ein Metallelement mit der Schlitzstruktur angeordnet, alternativ in eine insbesondere metallische Gehäusewand die Schlitzstruktur eingebracht. Durch die somit verbesserte Abstrahlungscharakteristik des RFID-Transponders 14 kann nun die Identifikation von außen erfolgen. Auf dem Gehäuse kann zudem eine Kennzeichnung angebracht werden, um dem Anwender anzuzeigen, von welcher Position einer RFID-Lesevorrichtung 16 das Lesen des RFID-Transponders 14 besonders gut möglich ist.

## Patentansprüche

1. System aus einer Vorrichtung (10) zur Aufnahme mindestens eines Objekts (12a-b) und einem in der Vorrichtung (10) angeordneten Objekt (12a-b), wobei an dem Objekt (12a-b) ein RFID-Transponder (14) mit einer Antenne (15) angeordnet ist und wobei die Vorrichtung (10) mindestens eine Wand (18) und mindestens eine zu dem Objekt (12a-b) beabstandete resonante Struktur (20) aufweist,
**dadurch gekennzeichnet,**
**dass** die resonante Struktur (20) als Schlitzstruktur in die Wand (18) eingebracht ist.

2. System nach Anspruch 1,
wobei die Vorrichtung (10) als Gehäuse oder Verkleidung ausgebildet ist.

3. System nach Anspruch 1 oder 2,
wobei die Wand (18) eine metallische Wand ist.

4. System nach einem der vorhergehenden Ansprüche,
wobei die resonante Struktur (20) auf eine Wellenlänge des RFID-Transponders (14) abgestimmt ist, insbesondere eine Strukturgröße der halben Wellenlänge des RFID-Transponders (14) aufweist.

5. System nach einem der vorhergehenden Ansprüche,
wobei die resonante Struktur (20) in einem auf eine Wellenlänge des RFID-Transponders (14) abgestimmten Abstand zu dem Objekt (12a-b) angeordnet ist, insbesondere im Abstand eines Viertels der Wellenlänge des RFID-Transponders (14).

6. System nach einem der vorhergehenden Ansprüche,
wobei das Objekt (12a-b) mindestens eine zweite resonante Struktur (20a-b) aufweist.

7. System nach einem der vorhergehenden Ansprüche,
wobei die zweite resonante Struktur (20a-b) als Direktor zwischen der Schlitzstruktur und dem Objekt (12a-b) angeordnet ist.

8. System nach einem der Ansprüche 1 bis 6,
wobei die zweite resonante Struktur (20a-b) als Reflektor in einer Verlängerung der Verbindung von Schlitzstruktur und Objekt (12a-b) angeordnet ist.

9. System nach einem der vorhergehenden Ansprüche,
das eine RFID-Lesevorrichtung (16) aufweist, um eine Information des RFID-Transponders (14) auszulesen.

10. Verfahren zum Lesen eines RFID-Transponders (14) auf einem Objekt (12a-b) in einer Vorrichtung (10 ) zur Aufnahme des Objekts (12a-b) mit mindestens einer Wand (18), wobei mindestens eine resonante Struktur (20) in einem Abstand zu dem Objekt (12a-b) angeordnet wird,
**dadurch gekennzeichnet,**
**dass** die resonante Struktur (20) als Schlitzstruktur in die Wand (18) eingebracht ist.
